# EUROPEAN PATENT APPLICATION

(11) **EP 0 586 966 A2**
(43) Date of publication of application: **16.03.1994**
(21) Application number: 93113585.9
(22) Date of filing: 25.08.1993
(51) Int. Cl.: C09J 151/06, C09J 151/04, C08F 265/06

(54) **High cohesion waterborne pressure sensitive adhesives**

(30) Priority: 10.09.1992 US 943358
(71) Applicant: National Starch and Chemical Investment Holding Corporation, Wilmington, Delaware 19809 (US)
(72) Inventor: Mudge, Paul R., Belle Mead, New Jersey 08502 (US); Sarkis, Michael T., Manville, New Jersey 08835 (US); Petriw, Gerhard, Somerville, New Jersey 08876 (US)
(74) Representative: Hagemann, Heinrich, Dr.rer.nat., Dipl.-Chem.

(57) **Abstract**

Waterborne pressure sensitive adhesive multipolymers exhibiting very high cohesive strength may be prepared by a two stage emulsion polymerization procedure (overpolymerization) in which the first stage is a low Tg (i.e., less than about -20°C) copolymer having good adhesive properties, and the second stage is a high Tg (i.e., greater than about +25°C) non-pressure sensitive homopolymer or copolymer and wherein the ratio of the first stage to the second stage are between 80 to 20 and 99 to 1.

## Description

Pressure sensitive adhesives, which are normally tacky materials adherent upon application of light pressure, are desirable in a number of industrial applications because they can be used with various materials and are easily adapted to production line techniques. In order to function satisfactorily as a pressure sensitive adhesive, a composition must provide a combination of properties including good tack, adhesion and cohesive strength, and must adhere instantaneously when applied to substrates of differing surface characteristics. To be useful in many industrial applications, the bond obtained by the use of the adhesive must have sufficient strength to remain firm over relatively long periods and under different and sometimes severe environmental conditions.

Heretofore, pressure sensitive adhesives characterized by a balance of both cohesive and adhesive strength could be prepared only from solvent based orosslinked solution acrylic polymers. Due to environmental and economic concerns, it would be advantageous to be able to produce water based pressure sensitive adhesives comparable in properties to solvent based adhesives.

We have now found that waterborne pressure sensitive adhesive (WBPSA) multipolymers exhibiting very high cohesive strength may be prepared by a two stage emulsion polymerization procedure (overpolymerization) in which the first stage is a low Tg (i.e., less than about -20°C) copolymer having good adhesive properties, and the second stage is a high Tg (i.e., greater than about +25°C) non-pressure sensitive homopolymer or copolymer and wherein the ratio of the first stage to the second stage are between 80 to 20 and 99 to 1, preferably between 90 to 10 and 97.5 to 2.5.

As noted above, the first stage emulsion polymer must be prepared so as to have a Tg less than about -20°C and includes polymers formed from one or more of the following monomers: ethylene, C₂ -C₈ alkyl (meth)acrylate, vinyl esters of C₂-C₁₃ alkanoic acids and C₂-C₁₀ dialkyl maleate or fumarate. Representative polymers useful for the first stage are vinyl or acrylic based copolymers including vinyl acetate copolymers with at least one copolymerizable comonomer such as another vinyl ester (e.g., vinyl-2-ethylhexanoate), fumarates, maleates, ethylene, acrylates, etc.; acrylate esters or polymers of styrene/acrylic monomers including alkyl acrylates or ethylenically unsaturated esters of acrylic or methacrylic acid containing 1 to 8 carbon atoms in the alkyl group. The corresponding methacrylate esters may also be used, as may mixtures of any of the above, provided the Tg of the polymer is less than about -20°C. Preferred first stage polymers are ethylene/vinyl acetate/2-ethylhexyl acrylate/di-2-ethylhexyl maleate; ethylene/vinyl acetate/di-2-ethylhexyl maleate; ethylene/vinyl acetate/2-ethylhexyl acrylate; vinyl acetate/2-ethylhexyl acrylate or all acrylics such as 2-ethylhexyl acrylate/butyl acrylate/methyl(meth)acrylate, or vinyl acrylics such as 2-ethyl hexyl acrylate/vinyl acetate/butyl acrylate.

The Tg of the polymers use in the second stage must be above room temperature. Exemplary of polymers useful in the second stage are polymethyl methacrylate, polystyrene or copolymers thereof with (meth)acrylonitrile or other C₁-C₈ acrylates, C₁-C₁₈ methacrylates or C₂-C₁₃ vinyl esters provided the Tg is above +25°C. The polymerizations may be prepared using conventional two stage polymerization techniques, whether by batch polymerization (equilibration) or by slow addition polymerization.

Certain functional monomers including those containing carboxyl or hydroxyl moiety may also be employed in either stage of the polymerization to improve adhesion and to contribute additional heat resistance. Representative olefinically unsaturated acids include the alkanoic acids having from 3 to 6 carbon atoms, such as acrylic acid, methacrylic acid, crotonic acid; alkenedioic (C-₄ to C-₁₂) acids, e.g., itaconic acid, maleic acid or fumaric acid or mixtures thereof in amounts sufficient to provide up to about 10 parts, preferably 0.5 to 4 parts, per 100 parts of major monomer. Suitable hydroxyl containing monomers include the hydroxy C₂-C₄ alkyl acrylates or methacrylates such as hydroxyethyl, hydroxypropyl and hydroxybutyl acrylate or methacrylate. These comonomers are used in amounts of 0.5 to 10 parts, preferably 1 to 4 parts, more preferably about 3 parts by weight per 100 parts major monomer; provided the amount is such as to keep the Tg of the various stages within the required range.

In addition to the monomers described above, conventional pre-crosslinking monomer and/or post-crosslinking monomers may optionally be present in either or both stages of the polymerization; however, no substantial benefits are achieved thereby.

Certain copolymerizable monomers which assist in the stability of the copolymer emulsion, e.g., vinyl sulfonic acid and 2-acrylamido-2-methylpropane sulfonic acid may also be used herein as latex stabilizers. These stabilizers are added in amounts of from about 0.2 to 3% by weight of the monomer mixture and are generally added to the first stage latex.

Suitable as polymerization catalysts for either stage of polymerization are the water-soluble free-radical-formers generally used in emulsion polymerization, such as hydrogen peroxide, sodium persulfate, potassium persulfate and ammonium persulfate, as well as tert-butyl hydroperoxide, in amounts of between 0.01 and 3% by weight, preferably 0.01 and 1% by weight based on the total amount of the emulsion. They can be used alone or together with reducing agents such as sodium formaldehyde-sulfoxylate, ferrous salts, sodium dithionite, sodium hydrogen sulfite, ascorbic acid, sodium sulfite, sodium thiosulfate, as redox catalysts in amounts of 0.01 to 3% by weight, preferably 0.01 to 1% by weight, based on the total amount of the emulsion.

The free-radical-formers can be charged with the surfactants or protective colloid or be added during the polymerization in doses.

Both stages of polymerization can be carried out at a pH of between 2 and 10, preferably between 2 and 5. In order to maintain the pH range, it may be useful to work in the presence of customary buffer systems, for example, in the presence of alkali metal acetates, alkali metal carbonates, alkali metal phosphates. Polymerization regulators, like mercaptans, aldehydes, chloroform, ethylene chloride and trichloroethylene, can also be added in some cases.

Both stages of polymerization are carried out using surfactants or protective colloids as the stabilizing agent, although the second stage overpolymerization can be carried out without additional surfactant adds. The emulsifying agents are those generally used in emulsion polymerization, as well as optionally present protective colloids. It is also possible to use emulsifiers alone or in mixtures with protective colloids.

The emulsifiers can be anionic, cationic, nonionic surface-active compounds or mixtures thereof. Suitable anionic emulsifiers are, for example, alkyl sulfonates, alkylaryl sulfonates, alkyl sulfates, sulfates of hydroxyalkanols, alkyl and alkylaryl disulfonates, sulfonated fatty acids, sulfates and phosphates of polyethyoxylated alkanols and alkylphenols, as well as esters of sulfosuccinic acid. Suitable cationic emulsifiers are, for example, alkyl quaternary ammonium salts, and alkyl quaternary phosphonium salts. Examples of suitable non-ionic emulsifiers are the addition products of 3 to 100 mols of ethylene oxide adducted to straight-chained and branch-chained alkanols with 6 to 22 carbon atoms, or alkylphenols, or higher fatty acids, or higher fatty acid amides, or primary and secondary higher alkyl amines; as well as block copolymers of propylene oxide with ethylene oxide and mixtures thereof. When combinations of emulsifying agents are used, it is advantageous to use a relatively hydrophobic emulsifying agent in combination with a relatively hydrophilic agent. The amount of emulsifying agent is generally from about 1 to about 10, preferably about 2 to about 8, weight percent of the monomers used in the polymerization.

The emulsifier used in the polymerization can also be added, in its entirety, to the initial charge to the polymerization zone or a portion of the emulsifier, e.g., from 90 to 25 percent thereof, can be added continuously intermittently during polymerization.

Various protective colloids may also be used in place of or in addition to the emulsifiers described above. Suitable colloids include partially acetylated polyvinyl alcohol, e.g., up to 50 percent acetylated, casein, hydroxyethyl starch, carboxymethyl cellulose, hydroxyethyl cellulose, gum arabic, and the like, as known in the art of synthetic emulsion polymer technology. In generally, these colloids are used at levels of 0.05% to 4% by weight based on the total emulsion.

The first stage polymerization reaction is generally continued until the residual monomer content is below about 1%. The completed reaction product is then allowed to cool to about room temperature, while sealed from the atmosphere.

After the first stage polymerization has been completed, the second stage monomers are added to the first stage. All of the second monomeric mixtures may be added directly to the first polymer emulsion and the second polymerization begun or the second monomeric mixture may be added gradually as the polymerization reaction proceeds. The second stage polymerization is carried out in substantially the same manner as the first stage, with or without the use of additional surfactant and/or protective colloid. The reaction is generally continued until the residual monomer level is less than about 0.1%.

The water borne pressure sensitive adhesive multipolymer latices produced have relatively high solids contents, e.g., up to about 65%, although they may be diluted with water if desired. The preferred latices will contain about from 55 to 65, and, most preferred about 60% weight percent solids.

### TESTING PROCEDURES

The first stage base adhesive latex and the water borne pressure sensitive adhesive multipolymer latex produced in the following examples were evaluated using the following adhesive test procedures.

180° Peel was tested using the method described by the Pressure-Sensitive Tape Council in PSTC-1. The test involves peeling the tape off a substrate at a 180° angle after application under relatively light pressure. Testing was done to allow 20 minutes and 24 hour contact of the adhesive with the test panel. The results are reported as the force required to remove the tape. The tack was measured using a loop tack tester (Testing Machines, Inc., Amityville, NY). The latter records the force, measured in ounces, to remove a one-inch by five-inch adhesive coated test strip, formed in the shape of a loop, from a stainless steel surface having one square inch of contact. The force is measured in ounces per square inch.

90° Quick Stick Test (PSTC-5) involves peeling the tape off a test sample at a 90° angle after application under a relatively light pressure. The tests are reported as the force required to remove the tape.

Shear adhesion is measured according PSTC No. 7 using a 500 gram (g) mass at room temperature. In this test, a shear force 178 degree angle is applied. The results are reported as the time required for the bond to fail. (2 and 4 psi static shear were tested).

In the following examples all parts are by weight and all temperatures in degrees Celsius unless otherwise noted.

### EXAMPLE I

The following example illustrates the emulsion polymerization methods used for preparing samples of first stage polymer adhesive latex bases covered by this invention. First stage base adhesive latex Examples A, D, F, and H were prepared with common equipment and procedures. These first stage latex bases all have glass transition temperatures about -30°C.

To a 10 liter autoclave was charged 675 g (of a 20% w/w solution in water) sodium alkyl aryl polyethylene oxide sulphate (3 moles ethylene oxide), 50 g (of a 70% w/w solution in water) alkyl aryl polyethylene oxide (30 moles ethylene oxide), 60 g (of a 25% w/w solution in water) sodium vinyl sulfonate, 5 g (of a 1% w/w solution in water) ferrous sulphate solution and 1100 g water. After purging with nitrogen, 1565 g vinyl acetate (VA) and 1435 g di-2-ethylhexyl maleate (DEHM) and 1.7 g triallyl cyanurate (TAC) were charged to the reactor.

The reactor was pressurized to 750 psi with ethylene and equilibrated at 50°C for 15 minutes. The polymerization was started by simultaneously metering in separate solutions of 60 g tertiary butyl hydroperoxide in 290 g water and 45 g sodium formaldehyde sulphoxylate and 2 g sodium acetate in 225 g water uniformly over a period of 5 hours. When the temperature of the contents reached 52°C an aqueous solution of 51 g acrylic acid (AA) in 500 g water was fed into the reactor uniformly over a period of 4 hours.

Once the addition of the initiators was started, the reaction temperature was raised to 80°-82°C and kept at this temperature until the reaction was completed. At the end of the initiator slow additions, the product was transferred to an evacuated vessel (30 liter) to remove residual ethylene from the system. It was identified as first stage base adhesive latex A.

Using the general procedure described above, three additional emulsions were prepared varying the amounts and/or monomeric compositions. The major monomers and the respective amounts of first stage base adhesive latex examples A, D, F and H are shown in Table 1.

**TABLE 1**

| FIRST STAGE BASE ADHESIVE LATEX | MONOMER COMPOSITIONS* (IN GRAMS) | | | |
|---|---|---|---|---|
| | VA | DEHM | AA | TAC |
| A | 1565 | 1435 | 51 | 1.7 |
| D | 1500 | 1500 | -- | 6.0 |
| F | 1565 | 1435 | 51 | -- |
| H | 1500 | 1500 | -- | -- |

| | | | | |
|---|---|---|---|---|
| * All compositions were pressurized with 750 psi ethylene. First stage base latexes D, F, and H had 1900 water in the initial charge. First stage base latexes D and H were prepared without the aqueous acrylic acid slow addition. First stage base latexes F and H did not contain triallyl cyanurate in the initial charge. | | | | |

The emulsion characteristics of the preceding four emulsions are shown in Table 2. The particle size (PS) is expressed in microns. The % grit represents the coagulum which did not pass through a 200 mesh screen. The glass transition temperature (Tg) was measured by differential scanning calorimetry (DSC).

**TABLE 2**

| FIRST STAGE BASE ADHESIVE LATEX | % SOLIDS | BROOKFIELD VISCOSITY (cps) | pH | % GRIT | P.S. | Tg (°C) |
|---|---|---|---|---|---|---|
| A | 56.5 | 1050 | 3.1 | 0.008 | .24 | -29 |
| D | 56.8 | 560 | 3.0 | 0.015 | .30 | -32 |
| F | 49.5 | 90 | 3.8 | 0.009 | .22 | -31 |
| H | 57.9 | 330 | 3.3 | 0.018 | .27 | -30 |

### EXAMPLE II

First stage base adhesive latex Examples B, C, E, and G were prepared with common equipment and procedures. These first stage latex bases have glass transition temperatures <-40°C.

To a 10 liter stainless steel reactor was charged 5 g (of a 80% w/w solution in water) sodium dihexyl ester of sulfosuccinic acid, 18 g of a alkyl aryl polyethylene oxide (10 moles ethylene oxide), 0.6 g dodecyl mercaptan, 15 g methacrylic acid (MAA), 300 g butyl acrylate (BA), 2.4 g sodium persulfate and 1300 g water.

After purging with nitrogen, the contents were heated to 78°-80°C and held at temperature for 15 minutes for seed conversion. After seed conversion, a monomer mixture of 8.0 g (of a 80% w/w solution in water) sodium dihexyl ester of sulfosuccinic acid, 31 g (of a 70% w/w solution in water) alkyl aryl polyethylene oxide (30 moles ethylene oxide), 6 g sodium bicarbonate, 1.5 g dodecyl mercaptan, 15 g acrylic acid (AA), 300 g vinyl acetate (VA), 1400 g butyl acrylate (BA), 1000 g 2-ethylhexyl acrylate (2-EHA) and 900 g water was fed into the reactor over a period of 4 hours uniformly. Simultaneous with the monomer mixture addition was an aqueous solution addition of 10 g sodium persulfate in 240 g water fed into the reactor over a period of 4-1/2 hours uniformly. Once the addition of sodium persulfate was started, the reaction temperature was maintained at 78°-80°C until the reaction was completed. It was identified as first stage base adhesive latex B.

Using the general procedure described above, three additional emulsions were prepared varying the amounts and/or monomeric compositions. The major monomers and the respective amounts of first stage base adhesive latex Examples B, C, E, and G are shown in Table 3.

**TABLE 3**

| FIRST STAGE ADHESIVE LATEX | MONOMER COMPOSITIONS (IN GRAMS) | | | | | | |
|---|---|---|---|---|---|---|---|
| | BA | 2-EHA | VA | MA | MAA | AA | HPA |
| B | 1700 | 1000 | 300 | ---- | 15 | 15 | --- |
| C | 450 | 1500 | --- | 1050 | 90 | -- | 120 |
| E | 1260 | 1560 | 180 | ---- | -- | 90 | --- |
| G | 450 | 1500 | --- | 1050 | 90 | -- | 90 |

First stage base latexes C and G were prepared without vinyl acetate and acrylic acid but contained hydroxy propyl acrylate (HPA) and methylacrylate (MA) in their monomer mixture slow adds. First stage base latex C was made with 500 g less water in the monomer mixture slow add.

The emulsion characteristics of the preceding four emulsions are shown in Table 4.

**TABLE 4**

| FIRST STAGE BASE ADHESIVE Latex | % SOLIDS | BROOKFIELD VISCOSITY (cps) | pH | % GRIT | P.S. | Tg (°C) |
|---|---|---|---|---|---|---|
| B | 56.0 | 250 | 3.0 | .012 | .35 | -52 |
| C | 62.5 | 590 | 2.1 | .008 | .19 | -44 |
| E | 56.3 | 350 | 3.4 | .020 | .25 | -55 |
| G | 54.5 | 215 | 2.3 | .013 | .28 | -41 |

Listed below is a compositional summary of the preceding first stage base adhesive latex examples as well as the initial shear adhesive values (2 psi hold static shear) obtained for these adhesives.
A 43.5 vinyl acetate (VA) / 39.5 di-2-ethylhexyl maleate (DEHM) / 17 ethylene (E) / 1.7 acrylic acid (AA) / 0.055 triallyl cyanurate (TAC) (2 psi shear = 11 hours)
B 56.5 butyl acrylate (BA) / 33 (2-ethyl hexyl) acrylate (2-EHA) / 10 vinyl acetate / 0.5 methacrylic acid (MAA) / 0.5 acrylic acid (2 psi shear = 6 hours)
C 50 (2-ethylhexyl) acrylate / 35 methyl acrylate (MA) / 15 butyl acrylate/ 4 hydroxypropyl acrylate (HPA) / 3 methacrylic acid (2 psi shear = 65 hours)
D 40 vinyl acetate / 40 di-2-ethylhexyl maleate / 20 ethylene / 0.2 triallyl cyanurate (2 psi shear = 4 hours)
E 52 (2-ethylhexyl) acrylate / 42 butyl acrylate / 6 vinyl acetate / 3 acrylic acid (2 psi shear = 4 hours)
F 43.5 vinyl acetate / 39.5 di-2-ethylhexyl maleate / 17 ethylene / 1.7 acrylic acid (2 psi shear = 4 hours)
G 50 (2-ethylhexyl) acrylate / 35 methyl acrylate / 15 butyl acrylate/ 3 methacrylic acid / 3 hydroxypropyl acrylate (2 psi shear = 134 hours).
H 40 vinyl acetate / 40 di-2-ethylhexyl maleate / 20 ethylene (2 psi shear = 2 hours).

### EXAMPLE III

Water borne pressure sensitive adhesive multipolymer latexes were prepared by either of the following two procedures:

### Slow addition overpolymerization example

To a two liter glass round bottom flask equipped with paddle agitator was charged 900 g (of a 56.5% w/w emulsion polymer in water) first stage base adhesive latex A and 5 g (of a 70% w/w solution in water) alkyl aryl polyethylene oxide (30 mols ethylene oxide). The pH of this mixture was adjusted to ph 4.0 with a 28% ammonium hydroxide solution. After purging with nitrogen, the content was heated to 60°-62°C. The second stage overpolymerization was then started by simultaneously metering in 25 g methyl methacrylate accompanied by two additional solution feeds of 1.5 tertiary butyl hydroperoxide in 25 g water and 1.0 g sodium formaldehyde sulphoxylate, 0.25 g sodium acetate in 25 g water uniformly over 1-1/2 and 2 hours, respectively. Once the addition of the initiators was started, the reaction temperature was maintained at 60°-62°C until the reaction was completed. It was identified as WBPSA multipolymer 1.

### Batch overpolymerization example

The procedure and recipe for the batch overpolymerization method was identical to the slow addition overpolymerization method up to the nitrogen purge step.

After purging with nitrogen, 25 g methyl methacrylate was added to the flask over a period of about 10-15 minutes and the content was heated to 60°-62°C. The first stage latex/methyl methacrylate mixture was then equilibrated at 60°C for 30 minutes.

The second stage overpolymerization was then started by simultaneously metering in separate solutions of 1.5 g tertiary butyl hydroperoxide in 25 g water and 1.0 g sodium formaldehyde sulphoxylate, 0.25 g sodium acetate in 25 g water uniformly over 2 hours.

Using the general procedure described above, two additional emulsions were prepared varying the amounts and/or monomeric compositions. The major monomers and the respective amounts of WBPSA multipolymer Examples 1, 2, 3, and 4 are shown in Table 5.

**TABLE 5**

| WBPSA MULTIPOLYMER | FIRST STAGE BASE ADHESIVE LATEX | SECOND STAGE COMPOSITIONS (IN GRAMS) | |
|---|---|---|---|
| | | MMA | BA |
| 1 | A | 25.0 | ---- |
| 2 | A | 25.0 | ---- |
| 3 | A | 18.8 | 6.2 |
| 4 | A | 37.5 | 12.5 |

WBPSA multipolymers 3 and 4 also contained butyl acrylate as part of the second stage monomer composition.

The emulsion characteristics of the preceding four emulsions are shown in Table 6.

**TABLE 6**

| WBPSA MULTIPOLYMERS | FIRST STAGE BASE ADHESIVE LATEX | % SOLIDS | BROOKFIELD VISCOSITY (cps) | pH | % GRIT | P.S. |
|---|---|---|---|---|---|---|
| 1 | A | 54.9 | 210 | 4.1 | .010 | .25 |
| 2 | A | 54.9 | 370 | 4.0 | .016 | .26 |
| 3 | A | 54.9 | 300 | 4.0 | .029 | .25 |
| 4 | A | 55.5 | 435 | 4.1 | .013 | .27 |

WBPSA multipolymer compositions 1-4, prepared by overpolymerizing 100 parts (dry weight) of Adhesive Base A, and their adhesive test results, are presented in Table 7. WBPSA multipolymers 1, 3 and 4 were prepared using a slow addition (SA) technique; WBPSA multipolymer 2 used the batch (Equilibration) polymerization technique.

**TABLE 7**

| WBPSA MULTIPOLYMER | FIRST STAGE BASE ADHESIVE LATEX | SECOND STAGE MONOMER(S) WT% | 180° PEEL (LBS/IN) | | TACK (OZ/IN) COHESION (HRS) | | | |
|---|---|---|---|---|---|---|---|---|
| | | | INITIAL | 24 HRS | LOOP TACK | 90° Q.S. | 2 PSI HOLD | 4 PSI HOLD |
| --- | A | --- | 3.3 | 4.2 | 26 | 19 | 11 | 2 |
| 1 | A | 5 MMA (SA) | 2.7 | 3.8 | 20 | 13 | 144 | 19 |
| 2 | A | 5 MMA (BATCH) | 3.0 | 4.0 | 22 | 14 | 167 | 21 |
| 3 | A | 3.75 MMA/1.75 | BA 2.4 | 3.7 | 19 | - | 43 | 8 |
| 4 | A | 7.5 MMA/2.5 BA | 2.1 | 3.4 | 13 | - | 154 | 9.5 |
| MMA = Methyl methacrylate | | | | | | | | |

The results presented in Table 7 show there was relatively little difference in the observed performance properties of the water borne pressure sensitive adhesive multipolymers when prepared by either the batch or slow addition process and that a significant cohesion reinforcement can be obtained with the preservation of good peel and tack properties by utilizing the two-stage emulsion polymerization technique described herein.

These results also indicate that cohesion reinforcement can be achieved with a copolymer second stage (Adhesives 3 and 4) although ultimate cohesion is best achieved with a higher Tg homopolymer.

### EXAMPLE IV

These WBPSA multipolymer examples were prepared by the slow addition overpolymerization procedure as stated in Example III. Using this general slow addition overpolymerization procedure, two additional emulsions were prepared varying the amounts and/or monomeric compositions. The major monomers and the respective amounts of WBPSA multipolymer Examples 5 and 6 are shown in Table 8.

**TABLE 8**

| WBPSA MULTIPOLYMER | FIRST STAGE BASE ADHESIVE LATEX | SECOND STAGE COMPOSITIONS (IN GRAMS) |
|---|---|---|
| | | MMA |
| 5 | B | 25.0 |
| 6 | C | 42.0 |

WBPSA multipolymer 6 contained 42 g methyl methacrylate.

The emulsion characteristics of the preceding two emulsions are shown below in Table 9.

**TABLE 9**

| WBPSA MULTIPOLYMER | FIRST STAGE BASE ADHESIVE LATEX | % SOLIDS | BROOKFIELD VISCOSITY (cps) | pH | % GRIT | P.S. |
|---|---|---|---|---|---|---|
| 5 | B | 54.9 | 70 | 3.4 | .013 | .31 |
| 6 | C | 61.0 | 420 | 3.8 | .022 | .23 |

The first stage base adhesive latexes A, B and C range in composition from hydrophilic (E/VA/DEHM - Base Adhesive Latex A) to hydrophobic (all acrylic - Base Adhesive Latex C) in nature. When tested using the 2 psi shear test, the first stage base adhesive latexes A, B and C gave values of 6, 11 and 65 hours, respectively.

These first stage base adhesive latexes when overpolymerized with methyl methacrylate yielded WBPSA multipolymers 1, 5 and 6, respectively. The cohesion strength data for these WBPSA multipolymers can be found in Table 10.

**TABLE 10**

| WBPSA MULTIPOLYMER | FIRST STAGE BASE ADHESIVE LATEX | SECOND STAGE MONOMER(S) WEIGHT PERCENT | COHESION 2 PSI HOLD (HOURS) | % COHESIVE STRENGTH IMPROVEMENT RELATIVE TO BASE ADHESIVE LATEX |
|---|---|---|---|---|
| 1 | A | 5 MMA | 144 | ∼1300 |
| 5 | B | 5 MMA | 30 | ∼ 500 |
| 6 | C | 7.5 MMA | 735 | ∼1100 |

The results presented in Table 10 show the substantial improvement in cohesive strength resulting from the two stage polymerization procedure described herein.

The following example also demonstrates the versatility of the overpolymerization process for the cohesion reinforcement of base adhesive latexes of varied composition.

The remainder of WBPSA multipolymer examples were prepared by the slow addition overpolymerization procedure as stated in Example III. Using this general slow addition overpolymerization procedure, all additional emulsions were prepared varying the amounts and or monomeric compositions. The major monomers and the respective amounts of WBPSA multipolymer examples are shown in the following tables.

### EXAMPLE V

### Effect of Matching Second Stage Monomer to the Hydrophilic/Hydrophobic Nature of the First Stage Latex Polymer Composition.

It has been observed that the first stage latex bases which contain a substantial hydrophilic percentage of the total polymer composition are best reinforced by a hydrophilic second stage monomer. This is the case with the first stage latex base A which has 43.5% of the total polymer composed of vinyl acetate (hydrophilic content). Table 11 shows that as methylmethacrylate (hydrophilic) is substituted as the second stage monomer by styrene (STY) (hydrophobic) the ultimate cohesive strength of the pressure-sensitive multipolymer is significantly reduced.

**TABLE 11**

| WBPSA MULTIPOLYMER | FIRST STAGE BASE ADHESIVE LATEX | SECOND STAGE MONOMER(S) WEIGHT PERCENT | COHESION 2 PSI HOLD (HOURS) |
|---|---|---|---|
| 1 | A | 5 MMA | 144 |
| 7 | A | 3.75 MMA/1.25 STY | 75 |
| 8 | A | 2.5 MMA/2.5 STY | 66 |
| 9 | A | 1.25 MMA/3.75 STY | 42 |

It is to be noted that while the use of the most hydrophobic second stage monomer does not provide the degree of cohesive improvement as does the more hydrophilic monomers, the results are, in all cases, substantially better than those of the unreinforced base adhesive latex which had a 2 psi value of only 11 hours.

**TABLE 12**

| WBPSA MULTIPOLYMER | FIRST STAGE BASE ADHESIVE LATEX | SECOND STAGE MONOMER(S) WT % | 180° PEEL LBS/IN) | | TACK (OZ/IN) COHESION (HOURS) | | | |
|---|---|---|---|---|---|---|---|---|
| | | | INT | 24 HOURS | LOOP TACK | 90° Q.S. | 2 PSI HOLD | 4 PSI HOLD |
| --- | D | --- | 4.0 | 6.1 | 37 | --- | 4 | 1.0 |
| 10 | D | 10 MMA | 1.7 | --- | 12 | --- | 100+ | 89 |
| 11 | D | 10 STY | 2.1 | 2.6 | 19 | --- | 100+ | 5.0 |
| 12 | D | 20 STY | 1.5 | 1.9 | 16 | --- | 100+ | 9.0 |

Table 12 provides additional data which shows that the hydrophilic methyl methacrylate is also more effective for the cohesive reinforcement of a hydrophilic (EVA/DEHM) first stage adhesive latex D.

**TABLE 13**

| WBPSA MULTIPOLYMER | FIRST STAGE BASE ADHESIVE LATEX (LETTER) | SECOND STAGE MONOMER(S) WT% | 180° PEEL (LBS/IN) | | TACK (OZ/IN) | | COHESION (HOUR) | |
|---|---|---|---|---|---|---|---|---|
| | | | INT | 24 HOURS | LOOP TACK | 90° Q.S. | 2 PSI HOLD | 4 PSI HOLD |
| --- | B | --- | 4.5 | 4.3 | 47 | 26 | 6 | 1.0 |
| 5 | B | 5 MMA | 2.1 | 2.9 | 35 | 19 | 30 | 3.5 |
| 11 | B | 2.5 MMA/2.5 STY | 2.2 | 3.0 | 36 | 21 | 36 | 3.3 |
| 14 | B | 5 STY | 2.4 | 3.0 | 36 | 19 | 40 | 4.3 |

Table 13 illustrates the opposite effect in that styrene (hydrophobic) is better matched to the more hydrophobic (vinyl/acrylic) first stage adhesive latex B (only 10% of which is vinyl acetate) which tends to cohesively reinforce better than the hydrophilic methyl methacrylate.

### EXAMPLE VI

### Effect of Second Stage Polymer Glass Transition Temperature on Reinforcement

Overpolymerizations with a monomer or monomer mixtures which provide a second stage polymer composition with a glass transition temperature (Tg) above room temperature showed cohesive strength improvements over the first stage latex base. Generally, higher Tg homopolymer or copolymer compositions provide the best reinforcement. For example, methylmethacrylate and styrene homopolymers, Tg's of 105°C and 100°C, respectively, provided the greatest enhancements in cohesive strength of the first stage latex bases. The table below shows the effect of second stage polymer Tg on the cohesive strength of the prepared water borne pressure sensitive adhesive multipolymers.

**TABLE 14**

| WBPSA MULTIPOLYMER | FIRST STAGE BASE ADHESIVE LATEX | SECOND STAGE MONOMER(S) WEIGHT PERCENT | THE Tg OF SECOND STAGE | COHESION 2 PSI HOLD (HOURS) |
|---|---|---|---|---|
| --- | A | --- | --- | 11 |
| 1 | A | 5 MMA | 105 | 144 |
| 15 | A | 3.75 MMA/1.25 BA | 47 | 43 |
| 16 | A | 2.5 MMA/2.5 BA | 4 | 14 |
| 17 | A | 1.25 MMA/3.75 BA | -28 | 8 |
| 18 | A | 5 BA | -54 | 4 |

Table 14 illustrates the need for high Tg reinforcing second stage (i.e., greater than +20°C, ideally +45°C or greater) and that as second stage Tg increases so does cohesion level.

### EXAMPLE VII

### Effect of Varying Second Stage Levels

Tables 15 and 16 show that the optimal level of second stage reinforcement depends on the base polymer and generally varies between 2.5 to 10 weight percent to gain the largest increase in cohesion with only mild reductions in peel and tack.

**TABLE 15**

| WBPSA MULTIPOLYMER | FIRST STAGE BASE ADHESIVE LATEX | SECOND STAGE MONOMER(S) WEIGHT PERCENT | COHESION 2 PSI HOLD (HOURS) |
|---|---|---|---|
| --- | E | --- | 4 |
| 19 | E | 5 MMA | 11 |
| 20 | E | 7.5 MMA | 13 |
| 21 | E | 10 MMA | 16 |
| --- | F | --- | 4 |
| 22 | F | 5 MMA | 34 |
| 23 | F | 7.5 MMA | 61 |
| 24 | F | 10 MMA | 54 |

**TABLE 16**

| WBPSA MULTIPOLYMER | FIRST STAGE BASE ADHESIVE LATEX | SECOND STAGE MONOMER(S) WT % | 180° PEEL (LBS/IN) | | TACK (OZ/IN) | | COHESION (HOURS) | |
|---|---|---|---|---|---|---|---|---|
| | | | INT | 24 HRS | LOOP TACK | 90° Q.S. | 2 PSI HOLD | 4 PSI HOLD |
| --- | G | --- | 3.4 | 4.5 | 34 | 16 | 134 | 9.6 |
| 25 | G | 2.5 MMA | 3.2 | 4.7 | 36 | 18 | 160+ | 11.3 |
| 26 | G | 5.0 MMA | 3.0 | 4.4 | 31 | 14 | 160+ | 15.3 |
| 27 | G | 7.5 MMA | 2.8 | 4.2 | 30 | 13 | 160+ | 18.1 |

Table 17 shows that second stage levels of 10 weight percent and higher increase cohesion even more but deteriorate peel and tack properties too dramatically for certain end uses.

**TABLE 17**

| WBPSA MULTIPOLYMER | FIRST STAGE BASE ADHESIVE LATEX | SECOND STAGE MONOMER(S) WT % | 180° PEEL (LBS/IN) | | TACK (OZ/IN) | | COHESION (HOURS) | |
|---|---|---|---|---|---|---|---|---|
| | | | INT | 24 HOURS | LOOP TACK | 90° Q.S. | 2 PSI HOLD | 4 PSI HOLD |
| --- | D | --- | 4.0 | 6.1 | 37 | --- | 4 | 1.0 |
| 10 | D | 10 MMA | 1.7 | --- | 12 | --- | 100+ | 89 |
| 11 | D | 10 STY | 2.1 | 2.6 | 19 | --- | 100+ | 5.0 |
| 12 | D | 20 STY | 1.5 | 1.9 | 16 | --- | 100+ | 9.0 |

### EXAMPLE VII

### Effect of Precrosslinking in the First Stage Latex Base

Cohesive strength reinforcements have been realized on first stage latex bases which do and do not contain precrosslinking. Table 18 below demonstrates that precrosslinked first stage latex bases are not essential for obtaining cohesive strength reinforcement.

Thus, in Table 18, Base Adhesive F contains no pre-crosslinking (i.e., no TAC) while Bass A and D contain 0.055 and 0.2% triallyl cyanurate, respectively.

Table 18 shows that while ultimate cohesion increases with precrosslinking, the level of second stage MMA is more important for obtaining cohesion reinforcement.

**TABLE 18**

| WBPSA MULTIPOLYMER | FIRST STAGE BASE ADHESIVE LATEX | SECOND STAGE MONOMER(S) WT % | 180° PEEL (LBS/IN) | | LOOP TACK (OZ/IN) | COHESION HOURS | | PERCENT COHESIVE STRENGTH IMPROVEMENT RELATIVE TO BASE ADHESIVE LATEX |
|---|---|---|---|---|---|---|---|---|
| | | | INT | 24 HOUR | | 2 PSI HOLD | 4 PSI HOLD | |
| --- | F | --- | 3.5 | 4.2 | 33 | 4 | 0.8 | --- |
| 22 | F | 5 MMA | --- | --- | --- | 34 | --- | ∼850 |
| 24 | F | 10 MMA | 2.8 | 3.5 | 14 | 54 | 5.8 | ∼1350 |
| --- | A | --- | 3.3 | 4.2 | 26 | 11 | 2 | --- |
| 1 | A | 5 MMA | 2.7 | 3.8 | 20 | 144 | 19 | ∼1300 |
| --- | D | --- | 4.0 | 6.1 | 37 | 4 | 1.0 | --- |
| 10 | D | 10 MMA | 1.7 | --- | 12 | 100+ | 89 | ∼8900 |

Table 19 shows that pre-crosslinking in the second stage overpolymerization can also be performed and still achieve good cohesion reinforcement results.

**TABLE 19**

| WBPSA MULTIPOLYMER | FIRST STAGE BASE ADHESIVE LATEX | SECOND STAGE MONOMER(S) WT % | 180° PEEL (LBS/IN) | | TACK (OZ/IN) | | COHESION (HOURS) |
|---|---|---|---|---|---|---|---|
| | | | INT | 24 HRS | LOOP TACK | 90° Q.S. | 2 PSI HOLD |
| --- | H | --- | 5.6 | 5.7 | 53 | 2.2 | 2 |
| 28 | H | 4 MMA/.5 TAC | 2.9 | 3.2 | 32 | 1.4 | 39 |
| 29 | H | 6 MMA/.5 TAC | 3.1 | 3.5 | 36 | 1.4 | 19 |
| 30 | H | 8 MMA/.5 TAC | 2.8 | 3.0 | 37 | 1.3 | 43 |

## Claims

1. A waterborne pressure sensitive adhesive composition comprising an emulsion polymer prepared by a two stage emulsion polymerization process in which the first stage comprises preparing a polymer having a Tg less than about -20°C and the second stage comprises polymerizing therewith a polymer having a Tg greater than about +25°C and wherein the ratio of the first stage polymer to the second stage polymer is between 80 to 20 and 99 to 1.

2. The adhesive of Claim 1 wherein the ratio of the first stage polymer to the second stage polymer is between 90 to 10 and 97.5 to 2.5.

3. The adhesive of Claim 1 wherein the first stage polymer is formed from one or more monomers selected from the group consisting of ethylene, C₂-C₈ alkyl (meth)acrylate, vinyl esters of C₂-C₁₃ alkanoic acids and C₂-C₁₀ dialkyl maleate or fumarate.

4. The adhesive of Claim 3 wherein the first stage polymer is selected from the group consisting of polymers of ethylene/vinyl acetate/di-2-ethylhexyl maleate; ethylene/vinyl acetate/di-2 ethylhexyl maleate/2-ethylhexylacrylate; ethylene/vinyl acetate/2-ethylhexyl acrylate; vinyl acetate/ 2-ethylhexyl acrylate, 2-ethylhexyl acrylate/butyl acrylate/methyl(meth)acrylate, and 2-ethylhexyl acrylate/vinyl acetate/butyl acrylate.

5. The adhesive of Claim 1 wherein the second stage polymer is selected from the group consisting of polymethyl methacrylate, polystyrene, copolymers of styrene with (meth)acrylonitrile, C₁-C₈ acrylates, C₁-C₁₈ methacrylates and C₂-C₁₃ vinyl esters.

6. The adhesive of Claim 1 wherein at least one of the polymers of stage one or stage two additionally contains carboxyl and/or hydroxyl functionality.

7. The adhesive of Claim 6 wherein the polymer contains a carboxyl containing monomer selected from the group consisting of olefinically unsaturated acids of alkanoic acids having from 3 to 6 carbon atoms; alkenedioic acids having from 4 to 12 carbon atoms, said monomer being present in an amount sufficient to provide up to 10 parts by weight per 100 parts major monomer in the polymer.

8. The adhesive of Claim 6 wherein the polymer contains a hydroxyl containing monomer selected from the group consisting of hydroxy C₂-C₄ alkyl acrylates or methacrylates in amounts of up to 10 parts by weight per 100 parts major monomer in the polymer.

9. A process for the preparation of a waterborne pressure sensitive adhesive comprising the steps of emulsion polymerizing a polymer having a Tg less than about -20°C and then overpolymerizing the first polymer with a second polymer having a Tg greater than about +25°C; wherein the ratio of the first polymer to the second polymer is between 80 to 20 and 99 to 1.
